Europäisches Patentamt

European Patent Office

Office européen des brevets

(11) Publication number: **0 121 441**
**A2**

## (12) EUROPEAN PATENT APPLICATION

(21) Application number: 84302299.7

(22) Date of filing: 04.04.84

(51) Int. Cl.³: **B 23 B 27/22**
**B 23 B 27/16**

(30) Priority: 04.04.83 US 481547

(43) Date of publication of application:
10.10.84 Bulletin 84/41

(84) Designated Contracting States:
AT BE CH DE FR GB IT LI NL SE

(71) Applicant: GENERAL ELECTRIC COMPANY
1 River Road
Schenectady New York 12305(US)

(72) Inventor: Schroeder, Terry Alan
35905 Fredericksburg
Farmington Hills Michigan 48018(US)

(74) Representative: Turner, Paul Malcolm
PAUL M. TURNER AND COMPANY European Patent
Attorneys 47 Marylebone Lane
London W1M 6DL(GB)

(54) Improved insert for a metal cutting tool.

(57) A metal cutting tool utilizes a circular or disc shaped cutting element (10) having a raised or projecting polygonal surface (13) defining a peripheral chip groove (14). The head portion (11) is cylindrical in shape.

FIG.I.

## IMPROVED INSERT FOR A METAL CUTTING TOOL

This invention relates to an improved metal cutting insert utilized mainly in the metal cutting industry for light grooving and profiling work, and more particularly to an improved insert having a disc shaped head which includes a raised polygonal section thereon to define a peripheral chip groove.

A metal cutting tool as utilized in metal cutting and removing operations may comprise a tool holder or shank having an indexable hard metal insert removably retained therein as a cutting element. Such a tool may be used for grooving, cutting profiling, etc. as well as for more specific operations such as parting off or cut off operations. A parting tool is utilized to provide a deep groove in a workpiece or to cut off a part of the work piece. One example is a cutting tool mounted in a lathe and utilized to cut off cylindrical sections of a shaft or provide deep grooves therein. In such a cut off operation it may be desirable to cut or remove as little metal as possible, or to cut a deep but minimally narrow groove. With the advent of small, highly efficient, very hard cemented carbide inserts where the inserts are very small, the tool holders were also required to be quite small so that the insert and the holder can progress deeply in the cut while not engaging the wall surfaces of the groove or cut.

When a cutting tool is designed for multiple operations, grooving, cut off, profiling, etc., careful control must be exercised over the metal being removed, as a chip or chips. Chip control is necessary to provide a proper cutting action, to dispose of the chip and to provide for a predetermined direction for chip flow. In a cut off operation, when the cutting tool is deep into the cut, the chip must be caused to flow evenly and outwardly from the groove.

-2-

An insert for a cutting tool as described comprises a disc or button shaped insert having a raised polygonal configuration concentrically on its upper surface to define a multidirectional chip control groove at its periphery.

This invention will be further described by way of example only, with reference to and as illustrated in the accompanying drawings, in which:-

FIG. 1 is a side elevational view of a preferred embodiment of an insert according to the practices of this invention;

FIG. 2 is a top view illustration of the insert of FIG. 1;

FIG. 3 is a side elevation of a cutting-tool of this invention; and

FIG. 4 is a partial side elevational view of the insert of FIG. 1.

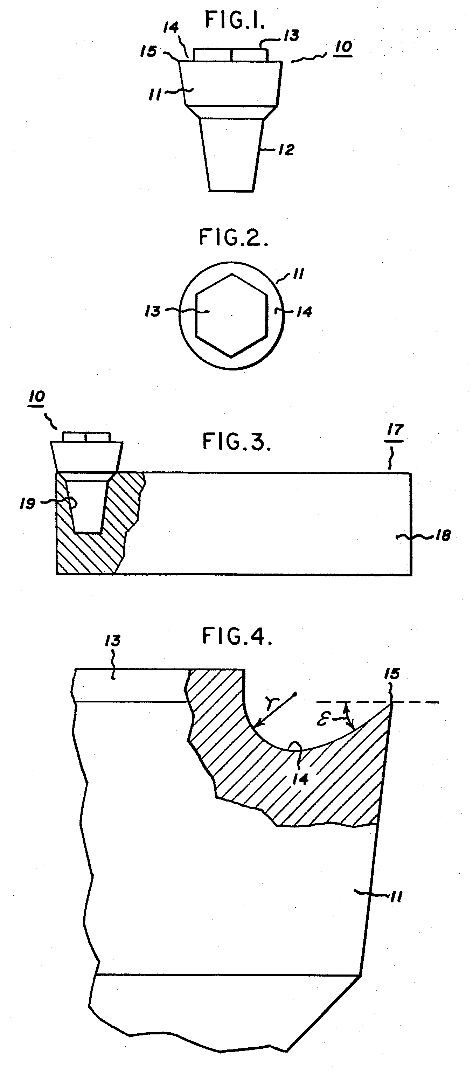

Referring now to FIG. 1, the insert 10 of this invention comprises a head portion 11 which is preferably disc like and circular, having a truncated conical tapered stem portion 12. Preferably the head and stem portions are manufactured as a single piece insert and made from a suitable metal or ceramic cutting material such as ceramics and cemented carbides. As illustrated, the head part 11 has a polygon raised section 13 which is equiradially inwardly spaced from the periphery of the head, or, concentric with the head. The periphery of the polygon section 13 defines, with the periphery of the head 11, a chip groove 14 and cutting edge 15 as more clearly shown in FIG. 2.

-3-

The insert 10 is mounted in a tool holder in a cutting relationship with a workpiece. More particularly, however, the precise mounting arrangement is extremely important where the tool is used in various positions for cutting, and stresses are imposed from many directions. For a cut off operation, the affixation must take place in a very small area since the tool must progress deeply into the cut and the cutting edge must be wider than the tool. A profiling and cut off tool is illustrated in FIG. 2.

Referring now to FIG. 2, the insert head 11 shows a raised polygon section or projection 13 and the defined peripheral chip groove 14. The polygon projection 13 and the head 11 are disposed in concentric relationship to define a symmetrical groove 15. The polygon projection 13 may range from a three sided projection to one of five or more. A six sided polygon is preferred because of ease of orientation of the insert and its self orienting feature, i.e. its ability to cut a proper groove without regard to its specific orientation in the holder of FIG. 2.

Referring now to FIG. 3, the tool assembly 17 comprises a tool holder 18 and the insert 10 of this invention mounted therein. In its simplified form the tool holder 18 is a thin rectangular metal bar having a truncated tapered opening 19 therein at the cutting end of the tool. This tapered opening closely corresponds to the truncated tapered stem 12 of insert 10 of FIG. 1. Because of the complementary fit of a tapered stem and tapered opening, the forces imposed on the cutting edge 16 of the insert 10 imposes very high frictional forces between the stem and the wall of the opening to restrain the insert 10 in the holder 18 and also to prevent rotation. This arrangement obviates mechanical clamping means which are usually large and cumbersome.

-4-

In the utilization of the tool of this invention, the insert 10 may be positioned in the holder 18 without any particular orientation and the projection 12 with its corners, on the polygon control, and break up the resulting chips. It has been found that with larger size inserts the number of sides of polygon 12 increases, while heavier feeds decrease the number of sides. The insert is an improvement over round inserts because it provides a fixed direction of chip flow as opposed to the round insert where the chip may be directionless. In the event that more precise orientation is desirable, either or both the tapered stem and the tapered opening may include protuberances or ridges or splines for this purpose.

Referring now to FIG. 4, there is illustrated some of the dimensions which may be used in the practice of this invention. A polygon section 13 was provided by grinding away a part of a cylindrical head 11 so that the polygon section was raised about 0.025 inches with a max set back of one face of the polygon of about 0.075 inches. Stem angle was about 10°. Ordinarily the width of the groove 14 may range from about 0.015 to about 0.050 inches measured from a corner of the polygon 13. The radius r of FIG. 4 may fall in the range of 0.005 to 0.050. The entry angle $\epsilon$ may be in the range of from 0 to $\neq$10°.

Although the present invention has been described with reference to the foregoing specification, many modifications, combinations and variations of the invention will be apparent to those skilled in the art in light of the above teachings. It is therefore understood that changes may be made to the particular embodiments of the invention which are within the full intended scope of the invention as defined by the following claims.

-5-

## CLAIMS

1.      A cutting tool insert comprising a cylindrical disc like head portion (11) characterised in that the head portion (11) has a concentric polygonal raised section (13) thereon which defines with the peripheral wall of said head portion (11) a peripheral chip groove (14).

2.      An insert as claimed in claim 1 characterised in that said polygon (13) has at least three sides but not more than twelve.

3.      An insert as claimed in claim 2 characterised in that said polygon (13) is hexagonal.

4.      An insert as claimed in any one of the preceding claims characterised in that said head portion (11) includes a tapered stem (12) adapted to be positioned in a complementary tapered opening in a tool holder.

5.      An insert as claimed in claim 4 characterised in that said tapered stem (12) is truncated.

6.      An insert as claimed in claim 4 or claim 5 characterised in that said tapered stem (12) is ridged or splined.

7.      An insert as claimed in any one of the preceding claims characterised in that said raised section (13) is raised at least 0.64 mm above the head portion (11).

FIG.I.

FIG.2.

FIG.3.

FIG.4.